# DEMANDE DE BREVET EUROPEEN

(11) **EP 2 392 744 A2**
(43) Date de publication de la demande: **07.12.2011**
(21) Numéro de dépôt: 11168580.6
(22) Date de dépôt: 02.06.2011
(51) Int. Cl.: E04D 3/08

(54) **Dispositif d'union de profilés destiné au support de toitures**

(30) Priorité: 04.06.2010 ES 201030574 U
(71) Demandeur: Producciones Mitjavila, S.A., 17730 Llers (ES)
(72) Inventeur: Mitjavila, Raymond, 66600 RIVESALTES (FR)
(74) Mandataire: Ponti Sales, Adelaida

(57) **Abrégé**

Dispositif d'union de profilés 1 destiné au support de toitures, dans lequel les mentionnés profilés comprennent au moins un espace longitudinal interne 2 pour le logement de profilés de canalisation 3a, 3b, 3c ayant une forme de canaux, où les mentionnés profilés de canalisation 3a, 3b, 3c sont arrangés en échelle et en se chevauchant à l'intérieur du mentionné espace longitudinal interne 2, de sorte qu'ils constituent un canal de ramassage de l'eau filtrée au niveau U des unions entre profilés 1, étant ainsi possible d'obtenir des profilés continus de grande longueur à partir de profilés plus courts, avec un montage très simple tout en assurant l'étanchéité maximale.

## Description

### ARRIÈRE-PLAN DE L'INVENTION

On connaît des dispositifs d'union de profilés destinés au support de toitures, dans lesquels ces profilés comprennent au moins un espace longitudinal interne pour le logement de profilés d'union ayant une forme de canaux.

Cette union se réalise en introduisant à pression un profilé, qui sera dénommé dorénavant profilé d'union, dans le mentionné espace longitudinal d'un premier profilé, tout en laissant qu'une partie de celui-ci dépasse, pour ensuite emboîter sur cette partie un second profilé ayant la même section que le premier profilé.

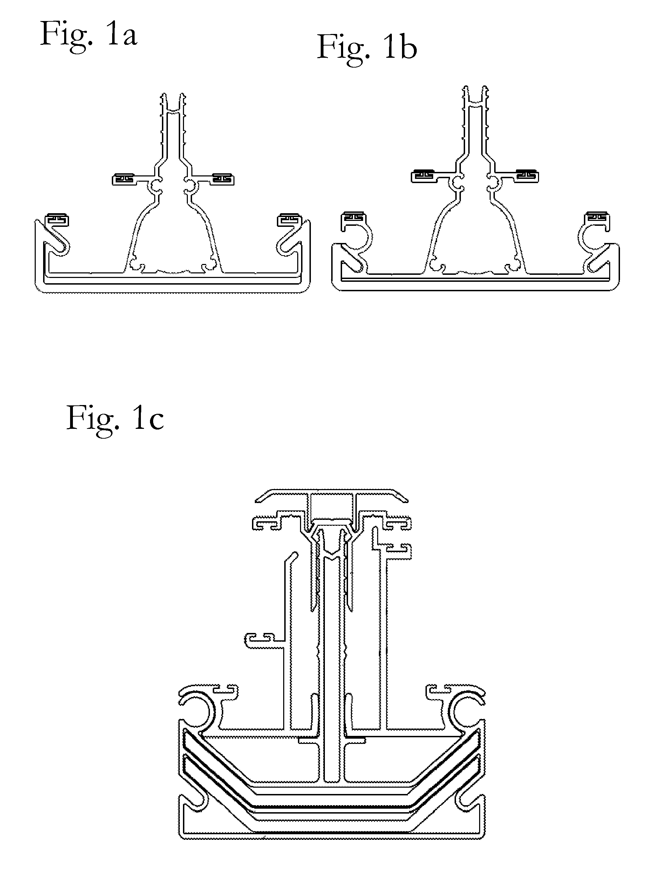

Comme il est représenté par exemple sur la figure 11 de la demande de certificat d'utilité U201030114, correspondant à la figure 1c de la présente demande, ces profilés de canalisation, indiqués U sur la mentionnée figure, ont une forme sensiblement en canal formée par trois parties rectilignes, qui lui confèrent une certaine résistance au fléchissement.

Cette solution est pratique du point de vue structurel, car elle offre une résistance élevée au niveau de l'union, permettant ainsi de couvrir de larges distances sans avoir recours a des solutions par soudure ou par vissage.

Une autre solution d'union est celle montrée sur les figures 1 a et 1b, dans laquelle le profilé d'union embrasse par l'extérieur les deux profilés a unir et qui se maintien accroché par deux guides latéraux communs aux deux profilés à unir.

Or, les solutions de l'état de la technique, tout en étant satisfaisantes, peuvent être améliorées pour leur application dans des régions à fortes pluies pour garantir l'étanchéité maximale de l'ensemble.

### DESCRIPTION DE L'INVENTION

Pour ce faire, la pressente invention propose un dispositif d'union de profilés destiné au support de toitures, dans lequel les mentionnés profilés comprennent au moins un espace longitudinal interne pour le logement de profilés de canalisation ayant une forme de canaux, caractérisé en ce que les mentionnés profilés de canalisation sont arrangés en échelle et en se chevauchant à l'intérieur du mentionné espace longitudinal interne, de sorte qu'ils constituent un canal de ramassage de l'eau filtrée au niveau des unions entre profilés.

Ainsi, il est possible d'obtenir des profilés continus de grande longueur à partir de profilés plus courts, avec un montage très simple tout en assurant l'étanchéité maximale.

Concrètement, l'invention permet d'avoir un canal de ramassage de l'eau à l'intérieur des mêmes profilés à unir, permettant ainsi le ramassage de l'eau filtrée au niveau des unions des profilés.

Par conséquent, pour coupler les profilés, l'installateur n'a qu'a insérer les profilés de canalisation pour qu'ils se chevauchent en échelle, comme on fait par exemple pour les tuiles, en formant ainsi un canal à l'intérieur du canal longitudinal des profilés.

L'opération d'insertion des profilés de canalisation se complète par l'insertion de profilés d'union comme ceux décrits à l'introduction, ou bien avec des profilés d'union arrangés dans l'âme comme il sera décrit dans la suite.

De préférence, les profilés de canalisation ont une section formée par trois parties droites, une centrale destinée à prendre appui sur la paroi interne inférieure de l'espace longitudinal ou bien sur un autre profilé d'union, et deux parties latérales symétriques inclinées par rapport à la centrale, et en appui sur les deux rebords internes latéraux de l'espace longitudinal interne.

Cette section confère au profilé d'union une résistance au fléchissement suffisante, et bien entendu, grâce à leur forme concave, la capacité de canaliser l'eau.

L'empilement de profilés non seulement permet de canaliser l'eau, mais en plus fourni une meilleure rigidité.

Avantageusement, les rebords internes latéraux de l'espace longitudinal interne correspondent à la surface interne de chacune de deux guides de fixation dont l'ouverture se trouve sur la surface externe latérale du profilé.

### BREVE DESCRIPTION DES DESSINS

Pour mieux comprendre le présent exposé, des dessins sont fournis dans lesquels, sans caractère limitatif et de forme simplifiée, une application pratique est représentée.
Les figures 1a a 1c sont plusieurs systèmes d'union de l'état de la technique.
La figure 2 est une vue en section dans laquelle on voit les profilés à unir, et dans leur intérieur, les profilés de canalisation.
La figure 3 est une vue en explosé du dispositif selon l'invention, où on peut apprécier les deux types de profilés.
La figure 4 est une vue en élévation latérale avec arrachement partiel ou l'on peut apprécier le chevauchement des profilés de canalisation tout le long du canal interne.
Les figures 5a et 5b son des perspectives de systèmes d'union de profilés qui incorporent un profilé vertical d'union emboîté dans l'âme des profilés.
Les figures 6a et 6b son des sections correspondantes aux perspectives 5a et 5b.

### DESCRIPTION D'UNE RÉALISATION PRÉFÉRÉE

Comme on peut apprécier sur les figures, l'invention se rapporte en général aux dispositifs d'union de profilés 1 destinés au support de toitures, dans lesquels les mentionnés profilés comprennent au moins un espace longitudinal interne 2 pour le logement de profilés de canalisation 3a, 3b, 3c ayant une forme de canaux.

Il est connu de réaliser l'union en prévoyant une longueur des profilés de canalisation suffisante pour assurer l'immobilisation mutuelle des profilés, notamment grâce à la friction que provoque l'emboîtement sans jeu entre l'espace longitudinal et le ou les profilés de canalisation.

En cas de filtrations, l'eau peut atteindre le profilé d'union supérieur, et être canalisée par l'intérieur de l'espace longitudinal dans la direction de la pente.

Or, si il est prévu qu'il y ait une seconde zone d'union, il est très probable ou presque sûr que des filtrations se produiront finalement, car l'eau aura la possibilité de passer en dessous des profilés de canalisation qui s'y trouvent, pour atteindre finalement le niveau de l'union, ou elle s'écoulera dans l'espace inférieure à la toiture.

Il est bien connu que même si il s'agit de très peu d'eau, celle-ci est très gênante, surtout si il est prévu en dessous de disposer un faux toit ou bien une toile, comme il est souvent le cas d'une toiture de support de panneaux solaires intégrés.

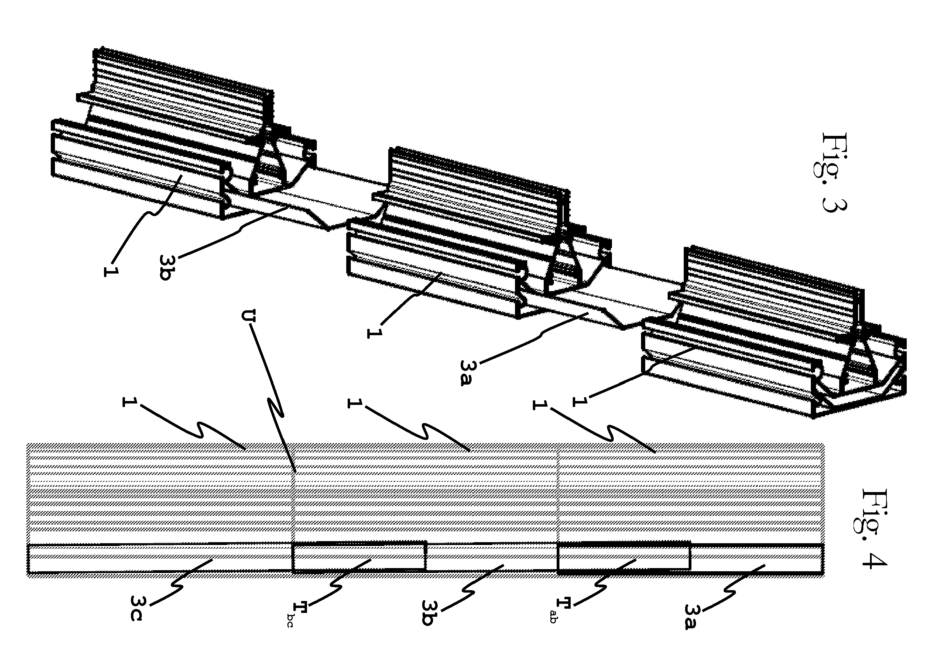

Selon l'invention, comme on peut apprécier notamment sur la figure 4, le risque de filtrations est minimisé en prévoyant que les mentionnés profilés de canalisation 3a, 3b, 3c soient disposés en échelle et en se chevauchant à l'intérieur de l'espace longitudinal interne 2, de sorte qu'ils constituent un canal de ramassage de l'eau filtrée au niveau U des unions entre profilés 1.

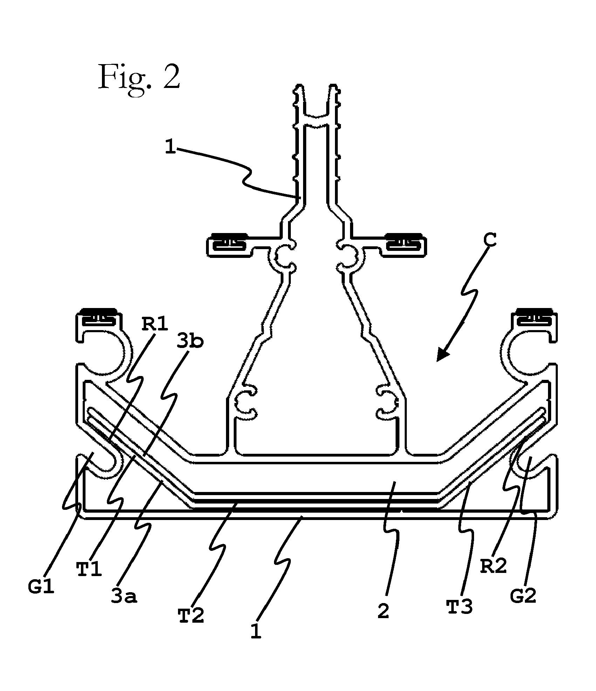

Comme on peut apprécier sur les figures 2 et 3, les profilés de canalisation 3a, 3b, 3c ont une section formée par trois parties droites T1, T2, T3, une partie centrale T2 destinée à prendre appui sur la paroi interne inférieure de l'espace longitudinal ou bien sur un autre profilé d'union, et deux parties latérales symétriques T1, T3 inclinées par rapport à la centrale, et en appui sur les deux rebords internes R1, R2 latéraux de l'espace longitudinal interne 2.

Dans l'exemple représenté sont montrés trois profilés de canalisation. Or, bien entendu, dans chaque situation on disposera les profilés de canalisation nécessaires pour éviter les filtrations au niveau des unions.

Par exemple, si on désire réaliser une structure de 21 mètres de longueur de pente maximale en employant trois profilés de 7 mètres, il sera nécessaire de couvrir avec des profilés en échelle au moins une longueur légèrement supérieure à 7 mètres, par exemple 7,5 mètres, de sorte que les deux unions intermédiaires se trouvent sur le canal.

Les rebords internes R1, R2 latéraux de l'espace longitudinal interne 2 correspondent à la surface interne de chacune de deux guides G1, G2 de fixation dont l'ouverture se trouve sur la surface externe latérale du profilé 1, de sorte que la fonction d'emboîtement des profilés de canalisation et des guides externes son réalisées par le même élément profilé.

Le profilé 1 a une forme de "T" inversée, dans laquelle là partir horizontale est pourvue du mentionné espace longitudinal 2.

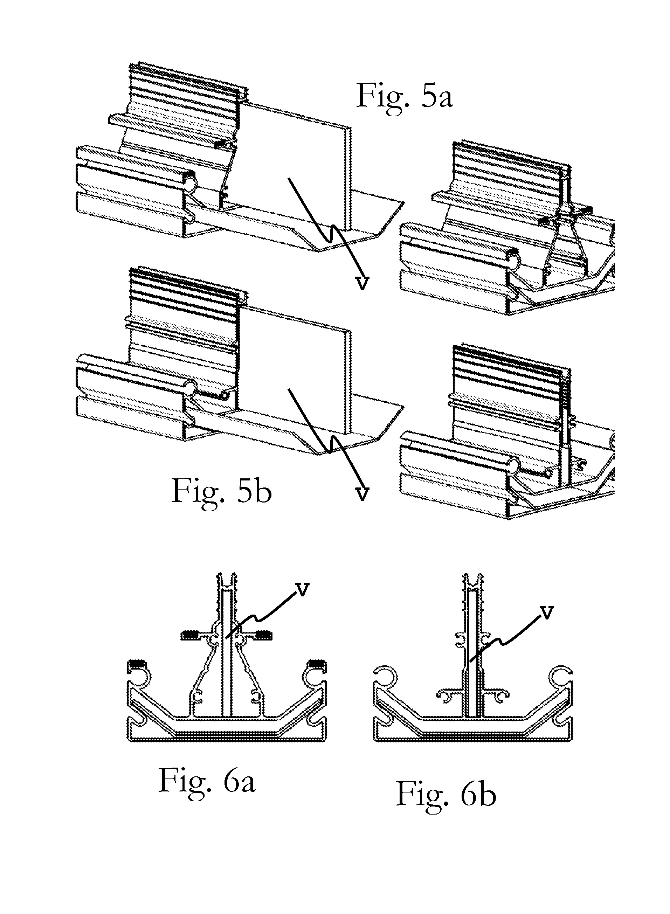

Finalement, comme on peut apprécier sur les figures 5a et 5b, l'âme du profilé 1 est pourvue d'un espace longitudinal central et pourvu dans son intérieur d'un profilé d'union V, destiné à l'union mécanique entre les deux profilés a unir. De préférence, comme on peut observer sur les deux réalisations des figures 5a a 6b, le profilé d'union est un profilé plat.

Avec le profilé V tel qu'il a été décrit il est possible d'avoir, comme l'inventeur a pu vérifier, un emboîtement entre profilés avec un jeu minimum.

## Revendications

1. Dispositif d'union de profilés (1) destiné au support de toitures, dans lequel les mentionnés profilés comprennent au moins un espace longitudinal interne (2) pour le logement de profilés de canalisation (3a, 3b, 3c) ayant une forme de canaux, **caractérisé en ce que** les mentionnés profilés de canalisation (3a, 3b, 3c) sont arrangés en échelle et en se chevauchant à l'intérieur du mentionné espace longitudinal interne (2), de sorte qu'ils constituent un canal de ramassage de l'eau filtrée au niveau (U) des unions entre profilés (1).

2. Dispositif selon la revendication antérieure, dans lequel les profilés de canalisation (3a, 3b, 3c) ont une section formée par trois parties droites (T1, T2, T3), une partie centrale (T2) destinée à prendre appui sur la paroi interne inférieure de l'espace longitudinal ou bien sur un autre profilé d'union, et deux parties latérales symétriques (T1, T3) inclinées par rapport à la centrale, et en appui sur les deux rebords internes (R1, R2) latéraux de l'espace longitudinal interne (2).

3. Dispositif selon la revendication antérieure, dans lequel les mentionnés rebords internes (R1, R2) latéraux de l'espace longitudinal interne (2) correspondent à la surface interne de chacune de deux guides (G1, G2) de fixation dont l'ouverture se trouve sur la surface externe latérale du profilé (1).

4. Dispositif selon quelconque des revendications antérieures, dans lequel le profilé (1) a une forme de T inversée, dans laquelle là partir horizontale est pourvue du mentionné espace longitudinal (2).

5. Dispositif selon la revendication antérieure, dans lequel l'âme du profilé (1) est pourvue d'un espace longitudinal central et pourvu dans son intérieur d'un profilé d'union (V).
